# EUROPEAN PATENT APPLICATION

(11) **EP 3 425 269 A1**
(43) Date of publication of application: **09.01.2019**
(21) Application number: 16892147.6
(22) Date of filing: 29.03.2016
(51) Int. Cl.: F21V 14/08, B60Q 1/14

(54) **LIGHT-TYPE CONVERSION DRIVING DEVICE FOR CAR LAMP LIGHT-TYPE CONVERSION DEVICE AND CONVERSION METHOD THEREFOR**

(30) Priority: 01.03.2016 CN 201610116184
(71) Applicant: Hasco Vision Technology Co., Ltd., Jiading District Shanghai 201821 (CN)
(72) Inventor: YU, Shijie, Shanghai 201821 (CN); ZHU, Minghua, Shanghai 201821 (CN); GE, Bin, Shanghai 201821 (CN); CHEN, Yujie, Shanghai 201821 (CN)
(74) Representative: Haseltine Lake LLP
(86) International application number: PCT/CN2016/077618
(87) International publication number: WO 2017/147956

(57) **Abstract**

Provided is a light-type conversion driving device for a car lamp light-type conversion device, comprising a shell, a rotor, a stator, a rotating shaft and end covers. The stator and stator windings inside the shell constitute a pair of arc-shaped stator magnetic poles capable of being electrically excited. The rotor is an arc-shaped permanent magnet, is fixed on the rotating shaft, and is arranged in a magnetic field space of the arc-shaped magnetic poles of the stator. The rotor is matched with the arc-shaped stator magnetic poles to form a closed magnetic circuit with an air gap. Two ends of the rotating shaft are respectively connected with an oscillating bar which extends in the radial direction of the rotating shaft. A movable shading plate is fixedly connected to the oscillating bar on the two ends of the rotating shaft, and the oscillating angle of the shading plate is the same as the rotation angle of the rotor. Further provided is a conversion method using the light-type conversion driving device. A mode whereby a rotation-type electromagnetic execution mechanism is used for driving the shading plate is adopted to achieve light-type conversion, collision noise generated in the electromagnet attracting and releasing processes is reduced, and a more comfortable driving environment is provided for a user.

## Description

### BACKGROUND OF THE INVENTION

### Technical Field

The invention relates to a rotation-type electromagnetic execution mechanism for a car lamp, in particular to a light-type conversion driving device for a car lamp light-type conversion device and a conversion method therefor. The light-type conversion driving device and the conversion method therefor are used for driving a shading plate of the car lamp light-type conversion device to oscillate so as to achieve light-type conversion, collision noise generated in the electromagnet attracting and releasing processes is reduced, and a more comfortable driving environment is provided for a user.

### Description of Related Art

Drivers will inevitably encounter the situations of encountering cars going uphill and downhill when driving. Particularly when the drivers drive cars at night, the lamplights of cars from opposite directions and lights reflected by the road surface when the cars are driven uphill or downhill may affect the sight of the drivers, the drivers even cannot clearly see the road in front if the lamplights or the reflected lights are too strong, and in this case, the drivers have to switch the high beam and low beam of the cars in time, and failure to timely switching may cause traffic accidents. In view of this, a light-type conversion mechanism is widely applied to modern vehicles to achieve control over light-type conversion, and an electromagnetic execution mechanism (light-type conversion driving device) is widely applied to the light-type conversion mechanism. Switching between the high beam and the low beam can be achieved through electromagnet attracting and releasing motions of the electromagnetic execution mechanism, and the motions of the electromagnetic execution mechanism are reliable.

Chinese Utility Model Patent titled "Improvement on Car Lamp High-Low Beam Switching Device" (Utility Model Patent No. ZL 200720129230.3, Authorization Publication No. CN201089421Y) discloses an improved car lamp high-low beam switching device, which is provided with a fixed barrier piece arranged on the front edge of a reflecting mirror and an adjustment device comprising a light-type conversion driving device and a movable barrier piece, wherein the light-type conversion driving device is provided with a movable bar configured to be connected with the movable barrier piece, the movable barrier piece is connected with the fixed barrier piece through a pivoting assembly which is used as a rotating shaft of the movable barrier piece, and a connecting arm perpendicular to the body of the movable barrier piece extends out from the movable barrier piece and is configured to be connected with the movable bar of the light-type conversion driving device. Due to the facts that the light-type conversion driving device of the adjustment device is arranged beside the reflecting mirror and that the pivoting assembly is used as the rotating shaft of the movable barrier piece, power consumption of the light-type conversion driving device is reduced, heat generated by the light-type conversion driving device is also reduced, and the temperature rise rate is decreased.

Chinese Utility Model Patent titled "High-Low Beam Switching Device for Automotive Headlamp" (Utility Model Patent No. ZL200920073422.6, Authorization Publication No. CN201462690U) discloses a high-low beam switching device for an automotive headlamp. The high-low beam switching device for the automotive headlamp is mainly composed of a fixed shading plate, a movable shading plate, a rotating shaft, a rotating shaft limiting gasket, an electromagnet and a connecting bushing, has the characteristics of being simple in structure, easy to produce and assemble, rapid in switching response and good in shading effect, and can switch the high beam and low beam of automobiles more efficiently and safely, thereby improving the driving safety.

However, in actual application, users always complain about the loud noise generated in the electromagnet attracting and releasing processes of the existing electromagnetic execution mechanism. Under the current overall condition where increasing emphasis is attached to comfort, it is quite necessary to reduce the noise generated when the electromagnetic execution mechanism operates. In addition, light-type vibrations are likely to be caused by strong vibration generated in the electromagnet attracting and releasing processes, and such vibration may cause failures such as connecting looseness, consequentially, affecting the reliability of the light-type conversion mechanism.

### BRIEF SUMMARY OF THE INVENTION

The objective of the invention is to solve the above-mentioned technical problems by providing a light-type conversion driving device for a car lamp light-type conversion device and a light-type conversion method therefor, which solve the technical problem of a loud noise generated when a light-type conversion mechanism operates by changing the motion form of the light-type conversion driving device, reduce light-type vibrations, and improve the reliability of the light-type conversion mechanism.

To solve the above-mentioned technical problems, the technical scheme adopted for the light-type conversion driving device for the car lamp light-type conversion device of the invention is as follows:
The light-type conversion driving device for the car lamp light-type conversion device is used for driving a shading plate of the car lamp light-type conversion device to oscillate and comprises stator cores, stator windings and a rotating shaft subassembly, wherein the stator cores and the stator windings are fixedly mounted in a shell, and the rotating shaft subassembly is disposed in a magnetic field space of stator poles.

The stator cores and the stator windings form a pair of arc-shaped stator magnetic poles capable of being electrically excited.

The rotating shaft subassembly has a sectorial section, is arranged in the magnetic field space of the arc-shaped stator poles, and is matched with the arc-shaped stator magnetic poles to form a closed magnetic circuit with an air gap.

The rotating shaft subassembly comprises:
a rotating shaft;
arc-shaped crown magnetic steel arranged on the outer circumferential surface of the top of the sectorial rotating shaft subassembly; and
a connecting part fixedly connected with the rotating shaft and the arc-shaped crown magnetic steel.

The arc-shaped crown magnetic steel of the rotating shaft subassembly has a sectorial central angle of 80-200° and a sectorial diameter of Φ5-12 mm.

The rotating shaft subassembly oscillates around the rotating shaft with the center of the rotating shaft as an original point, has two ends respectively connected with an oscillating bar which extends in the radial direction of the rotating shaft, and is used for driving a movable shading plate of the car lamp light-type conversion device to oscillate. The oscillating angle of the shading plate is the same as the rotation angle of the rotating shaft subassembly.

Preferably, the arc-shaped crown magnetic steel of the rotating shaft subassembly has a sectorial central angle of 100-140° and a sectorial diameter of Φ7-10 mm.

The connecting part fixedly connected with the rotating shaft and the arc-shaped crown magnetic steel is an integrally injection-molded part. The magnetic steel and limiting parts on two ends of an injection-molded plastic have a sectorial central angle of 60-120°.

Preferably, the design value of the sectorial central angle of the magnetic steel of the rotating shaft subassembly and the limiting parts on the two ends of the integrally injection-molded part of the injection-molded plastic is 90-100°.

The light-type conversion driving device for the car lamp light-type conversion device is characterized in that:
The arc-shaped crown magnetic steel arranged on the arc-shaped outer circumferential surface of the connecting part is made from neodymium-iron-boron magnetic powder through die casting, is provided with a countersunk head structure on the surface to improve the product strength, and has a thickness of 2-6 mm, the connecting part is made from injection-molded PBT materials, and the arc-shaped crown magnetic steel and the rotating shaft are integrally formed through injection molding.

Preferably, the injection-molded plastic is PBT+30GF, and the arc-shaped crown magnetic steel has a thickness of 2-4 mm.

The light-type conversion driving device for the car lamp light-type conversion device is characterized in that:
The whole stator has an arc-shaped sectorial section; two stator windings are wound between an inner arc-shaped sector and an outer arc-shaped sector of the stator, the inner arc-shaped sector is composed of two arc-shaped sector parts made by silicon steel sheets with a reversing micro-groove, having an interval of 0.5-2 mm and preferably of0.8-1.2 mm, formed therebetween; and one stator winding is wound between each of the two inner arc-shaped sector parts and the outer arc-shaped sector.

The light-type conversion driving device for the car lamp light-type conversion device is characterized in that:
The included angle γ between the two stator cores is 60-120° and preferably is 80-95°.

The reversing micro-groove (gap) have two functions:
1. To ensure the microminiaturization design of the product and process producibility and to obtain reasonable values;
2. To maximize the number of turns of the two-phase windings through the smallest reversing grooves.

The light-type conversion driving device for the car lamp light-type conversion device is characterized in that:
The outer arc-shaped sector of the stator has a sectorial central angle α of 100-160°, and the inner arc-shaped sector of the stator has a sectorial central angle β of 170-230°.

The sectorial central angles of the inner and outer arc-shaped sectors of the stator are designed to be matched with the overall magnetic circuit structure of the light-type conversion driving device and the rotation angle of the light-type conversion driving device.

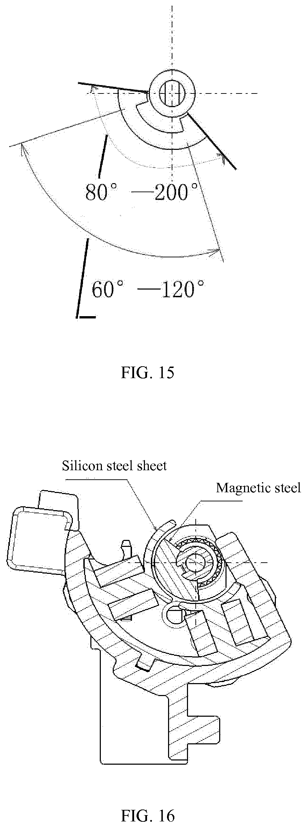

For instance, the sectorial central angles of the inner and outer arc-shaped sectors of the stator (silicon steel sheet) are so designed that the magnetic steel of the rotating shaft is completely covered by the silicon steel sheet when the light-type conversion driving device is located at a zero position. Please refer to FIG. 15 for the state where the light-type conversion driving device is located at the zero position.

The light-type conversion driving device for the car lamp light-type conversion device is characterized in that:
Each whole stator core is formed by stacked silicon steel sheets through punching. Each silicon steel sheet has a thickness of 0.3-2 mm and preferably has a thickness of 0.5-0.8 mm. The stacked silicon steel sheets have a total length of 20-40 mm and preferably have a total length of 25 -30 mm.

The light-type conversion driving device for the car lamp light-type conversion device is characterized in that:
The number of turns of each stator winding is 200-350, and each stator winding has a wire diameter of 0.14-0.28 mm. Preferably, the number of turns of each stator winding is 248-288, and each stator winding has a wire diameter of 0.18-0.20 mm.

According to the light-type conversion driving device for the car lamp light-type conversion device, a light-type conversion driving device protective cover matched with the shell in shape is preferably arranged on the periphery of the shell.

The light-type conversion driving device protective cover is made from metal and is used for covering the periphery of the shell for the car lamp light-type conversion device. A bent part used for protecting the stator windings is formed on the periphery of the light-type conversion driving device protective cover.

The distance between the light-type conversion driving device protective cover and the outer circumferential surface of the shell is 0.3-1.5 mm, so that outside heat is isolated from a body of the light-type conversion driving device, and accordingly, the light-type conversion driving device is protected.

The light-type conversion driving device for the car lamp light-type conversion device is characterized in that:
The rotating shaft subassembly is rotatably fixed in the magnetic field space of the arc-shaped magnetic poles of the stator via shaft holes formed in the end covers on two ends of the rotating shaft subassembly;
In the power-off state, the rotating shaft subassembly stays at an initial position where the magnetic steel is opposite to one magnetic pole of the stator;
In the power-on state, the rotating shaft subassembly rotates, under the effect of a magnetic field generated by the stator windings, to an operating position where the magnetic steel of the rotating shaft subassembly is opposite to the pair of magnetic poles of the stator;
Two ends of the rotating shaft subassembly are respectively connected with an oscillating bar which extends in the radial direction of the rotating shaft;
The movable shading plate is fixedly connected to the oscillating bar and is arranged on an optical axis of a car lamp, and the included angle between the movable shading plate and the optical axis can change along with the rotation angle of the rotating shaft subassembly; and the contour line of the movable shading plate is located on the light path of the car lamp, a high-low illumination light type changing along with the rotation angle of the rotating shaft subassembly is formed through projection, and the oscillating angle of the movable shading plate is the same as the rotation angle of the rotating shaft subassembly.

The light-type conversion driving device for the car lamp light-type conversion device is characterized in that:
1. The magnetic pole of the rotating shaft subassembly is an N pole;
2. After coils of the stator windings are powered on, a magnetic field is generated in the light-type conversion driving device, the windings on the upper side generates an N pole repelling a rotor, and the windings on the lower side generate an S pole attracting the rotor;
3. The rotating shaft subassembly rotates downwards under the dual effect of a repulsive force generated by the windings on the upper side and an attractive force generated by the windings on the lower side;

The rotating shaft subassembly drives the movable shading plate of the car lamp light-type conversion device to oscillate to complete light-type conversion.

Preferably, to prevent coated wires from being damaged in the wire winding process, the inner arc-shaped sector, located below the stator coil windings, of the stator is coated with high-temperature-resistant environment-friendly epoxy resin protective paint with a thickness not over 0.3 mm. The environment-friendly paint is required to resist a temperature not lower than 200°C.

Preferably, according to the light-type conversion driving device for the car lamp light-type conversion device, before the device is powered on, flat positions (namely the initial position before car lamp light-type conversion) are parallel to the wall of the closed end of the light-type conversion driving device.

The rotating shaft is made from stainless steel metal. The flat positions, used for determining an initial angle and having a flat chord-shaped section, are formed on two ends of the rotating shaft. Before the device is powered on, the flat positions (namely the initial position before car lamp light-type conversion) are parallel to the wall of the closed end of the light-type conversion driving device. The flat positions of the metal rotating shaft of the rotating shaft subassembly are assembled in clamping grooves in the shading plate and then are welded under pressure through professional equipment. The structure is simple and high in reliability, and to meet high relevant dimension requirements for the product, deflection and cracks should be avoided in the pressure welding process.

The light-type conversion driving device for the car lamp light-type conversion device is characterized in that:
To protect the light-type conversion driving device shell against ablation caused by sunlight focused in PES, the light-type conversion driving device comprises a white shell.

According to the light-type conversion driving device for the car lamp light-type conversion device, a sheet metal shell can be used as a protective cover to wrap the light-type conversion driving device shell. The light-type conversion driving device shell wrapped with the sheet metal shell can effectively protected against sunlight focused in PES and thus is prevented against ablation caused by a sunlight focusing point.

According to the light-type conversion driving device for the car lamp light-type conversion device, the light-type conversion driving device is preferably further comprises a spring assembly composed of a volute spiral spring and a spring bracket. The spring assembly is fixed on the shell through the spring bracket. The free end of the volute spiral spring is connected to the shading plate. In the power-off state, the rotating shaft subassembly rotates, under the effect of the volute spiral spring, to the initial position and is then maintained at the initial position through the transmission of the oscillating bar and the rotating shaft.

In the high-low beam switching process of an automobile, angle changes of the movable shading plate are the key of conversion. The flexibility of the movable shading plate has a direct influence on the sensitivity of the conversion device and even the driving safety. According to the light-type conversion driving device, mechanical friction between the movable shading plate and parts around is reduced, and thus, the movable shading plate can rotate more flexibly, and the conversion sensitivity is improved.

As shown in the figures, a fixed shading plate is connected with the movable shading plate through the rotating shaft, and the movable shading plate rotates around the rotating shaft 3.

The rotating shaft can be divided into three parts in the axial direction. The front end and the rear end of the rotating shaft are respectively connected with the fixed shading plate 5 and the movable shading plate 2 in a pivoted manner. A rotating shaft limiting gasket is arranged at the end with the movable shading plate 2 and is located between a riveting point and the movable shading plate 2, so that free rotation of the movable shading plate 2 is ensured. Small gaps are reserved between the movable shading plate 2 and the rotating shaft limiting gasket as well as between the movable shading plate 2 and the rotating shaft so that the shading plate can rotate more flexibly, and conversion sensitivity is higher.

The technical scheme of a conversion method using the light-type conversion driving device for the car lamp light-type conversion device is as follows:

The conversion device uses any of the light-type conversion driving devices for the car lamp light-type conversion device, and is used for driving the movable shading plate of the car lamp light-type conversion device to oscillate. The conversion method is characterized in that:
The rotating shaft subassembly is rotatably fixed in the magnetic field space of the arc-shaped magnetic poles of the stator through the shaft holes in the end covers on the two ends of the rotating shaft subassembly
In the power-off state, the rotating shaft subassembly stays at the initial position where the magnetic steel is opposite to one magnetic pole of the stator;
In the power-on state, the rotating shaft subassembly rotates, under the effect of the magnetic field generated by the stator windings, to the operating position where the magnetic steel of the rotating shaft subassembly is opposite to the pair of magnetic poles of the stator;
Two ends of the rotating shaft subassembly are respectively connected with an oscillating bar which extends in the radial direction of the rotating shaft;
The movable shading plate is fixedly connected to the oscillating bar and is located on the optical axis of the car lamp, and the included angle between the movable shading plate and the optical axis can change along with the rotation angle of the rotating shaft subassembly; the contour line of the movable shading plate is located on the light path of the car lamp, and a high-low illumination light type changing along with the rotation angle of the rotating shaft subassembly is formed through projection; and the oscillating angle of the movable shading plate is the same as the rotation angle of the rotating shaft subassembly.

The operating principle of the conversion method using the light-type conversion driving device for the car lamp light-type conversion device is as follows:
The magnetic pole of the rotating shaft subassembly is an N pole;
After coils of the stator windings are powered on, a magnetic field is generated in the light-type conversion driving device, the windings on the upper side generate an N pole repelling a rotor, and the windings on the lower side generate an S pole attracting the rotor;
The rotating shaft subassembly rotates downwards under the dual effect of a repulsive force generated by the windings on the upper side and an attractive force generated by the windings on the lower side.

The conversion method using the light-type conversion driving device for the car lamp light-type conversion device is characterized in that:
The arc-shaped crown magnetic steel arranged on the arc-shaped outer circumferential surface of the connecting part is made from neodymium-iron-boron magnetic powder through die casting, is provided with a countersunk head structure on the surface to improve the product strength, and has a thickness of 2-6 mm, the connecting part is made from injection-molded PBT materials, and the arc-shaped crown magnetic steel and the rotating shaft are integrally formed through injection molding.

Preferably, the injection-molded plastic is PBT+30GF, and the arc-shaped crown magnetic steel has a thickness of 2-4 mm.

The conversion method using the light-type conversion driving device for the car lamp light-type conversion device is characterized in that:
The whole stator has an arc-shaped sectorial section; two stator windings are wound between an inner arc-shaped sector and an outer arc-shaped sector of the stator, the inner arc-shaped sector is composed of two arc-shaped sector parts made by silicon steel sheets with a silicon steel sheet reversing micro-groove, having an interval of 0.5-2 mm and preferably of 0.8-1.2 mm, formed therebetween; and one stator winding is wound between each of the two inner arc-shaped sector parts and the outer arc-shaped sector.

The conversion method using the light-type conversion driving device for the car lamp light-type conversion device is characterized in that:

The included angle γ between the two stator cores is 60-120° and preferably is 80-95°.

The reversing micro-groove(gap) have two functions:
1. To ensure the microminiaturization design of the product and process producibility and to obtain reasonable values;
2. To maximize the number of turns of the two-phase windings through the smallest reversing groove.

The conversion method using the light-type conversion driving device for the car lamp light-type conversion device is characterized in that:

The outer arc-shaped sector of the stator has a sectorial central angle α of 100-160°, and the inner arc-shaped sector of the stator has a sectorial central angle β of 170-230°.

The sectorial central angles of the inner and outer arc-shaped sectors of the stator are designed to be matched with the overall magnetic circuit structure of the light-type conversion driving device and the rotation angle of the light-type conversion driving device.

For instance, the sectorial central angles of the inner and outer arc-shaped sectors of the stator (silicon steel sheet) are so designed that the magnetic steel of the rotating shaft is completely covered by the silicon steel sheet when the light-type conversion driving device is located at a zero position. Please refer to FIG. 15 for the state where the light-type conversion driving device is located at the zero position.

The conversion method using the light-type conversion driving device for the car lamp light-type conversion device is characterized in that:

Each whole stator core is formed by stacked silicon steel sheets through punching. Each silicon steel sheet has a thickness of 0.3-2 mm and preferably has a thickness of 0.5-0.8 mm. The stacked silicon steel sheets have a total length of 20-40 mm and preferably have a total length of 25-30 mm.

The conversion method using the light-type conversion driving device for the car lamp light-type conversion device is characterized in that:

The number of turns of each stator winding is 200-350, and each stator winding has a wire diameter of 0.14-0.28 mm. Preferably, the number of turns of each stator winding is 248-288, and each stator winding has a wire diameter of 0.18-0.20 mm.

According to the conversion method using the light-type conversion driving device for the car lamp light-type conversion device of the invention, a light-type conversion driving device protective cover matched with the shell in shape is preferably arranged on the periphery of the shell.

The light-type conversion driving device protective cover is made from metal and is used for covering the periphery of the shell for the car lamp light-type conversion device. A bent part used for protecting the stator windings is formed on the periphery of the light-type conversion driving device protective cover.

The distance between the light-type conversion driving device protective cover and the outer circumferential surface of the shell is 0.3-1.5 mm, so that outside heat is isolated from a body of the light-type conversion driving device, and accordingly, the light-type conversion driving device is protected.

According to the conversion method using the light-type conversion driving device for the car lamp light-type conversion device, the light-type conversion driving device is preferably further comprises a spring assembly composed of a volute spiral spring and a spring bracket. The spring assembly is fixed on the shell through the spring bracket. The free end of the volute spiral spring is connected to the shading plate. In the power-off state, the rotating shaft subassembly rotates, under the effect of the volute spiral spring, to the initial position and is then maintained at the initial position through the transmission of the oscillating bar and the rotating shaft.

The conversion method using the light-type conversion driving device for the car lamp light-type conversion device is characterized in that:

The method comprises a light-type conversion limiting mechanism, connected with the light-type conversion driving device shell arranged on the car lamp light-type conversion device, of the light-type conversion driving device;

The light-type conversion limiting mechanism of the light-type conversion driving device comprises an elastic low-beam rotating shaft limiting gasket and an elastic high-beam rotating shaft limiting gasket;

The elastic low-beam rotating shaft limiting gasket is arranged on the upper portion of the movable shading plate and is used for preventing the movable shading plate from colliding with the fixed shading plate behind when the movable shading plate rotates to a low-beam position;

The elastic high-beam rotating shaft limiting gasket is arranged on a side cover subassembly on one end of the front portion of the light-type conversion driving device shell and is used for preventing the movable shading plate from colliding with the light-type conversion driving device shell in front when the movable shading plate rotates to a high-beam position.

The conversion method using the light-type conversion driving device for the car lamp light-type conversion device invention is characterized in that:

Two elastic low-beam rotating shaft limiting gaskets are arranged and respectively located on two ends of the upper portion of the movable shading plates;

The elastic low-beam rotating shaft limiting gaskets are two rubber gaskets arranged on two sides of the movable shading plate, grooves are formed in the middle of the two rubber gaskets arranged on the two sides of the movable shading plate and are fixed with round holes of the movable shading plate in an embedded and clamped manner, and thus, the movable shading plate is kept parallel to a holder, and reliable light-type conversion is ensured.

The conversion method using the light-type conversion driving device for the car lamp light-type conversion device is characterized in that:

The elastic high-beam rotating shaft limiting gasket is a rubber block fixedly disposed between one axial end of the light-type conversion driving device shell and the side cover subassembly and provided with a round mounting hole;

The round mounting hole of the elastic high-beam rotating shaft limiting gasket is matched with a protruding cylinder located at a mounting position on one axial end of the light-type conversion driving device shell;

The round mounting hole of the elastic high-beam rotating shaft limiting gasket is matched with the protruding cylinder located at the mounting position on one axial end of the light-type conversion driving device shell, and then the side cover subassembly is assembled; and the cylinder in the shell is designed to prevent the rubber block from falling out.

The light-type conversion limiting mechanism of the light-type conversion driving device is characterized in that:

The elastic high-beam rotating shaft limiting gasket and the elastic low-beam rotating shaft limiting gaskets are made from silicon rubber and have a hardness of shA40-70.

The invention has the following beneficial effects:
1. According to the light-type conversion driving device and the car lamp light-type conversion device and method using the light-type conversion driving device, a mode whereby the light-type conversion driving device is used for driving the movable shading plate is adopted to achieve light-type conversion, collision noise generated in the electromagnet attracting and releasing processes is reduced, and a more comfortable driving environment is provided for a user;
2. According to the light-type conversion driving device and the car lamp light-type conversion device and method using the light-type conversion driving device, the light-type conversion driving device is used for driving the movable shading plate, so that light-type vibrations caused by vibration generated in the electromagnet attracting and releasing processes and connecting looseness resulting from such vibration are reduced, and thus, the service life of the electromagnetic rotation-type car lamp light-type conversion device is prolonged, and the reliability of the electromagnetic rotation-type car lamp light-type conversion device is improved;
3. According to the light-type conversion driving device and the car lamp light-type conversion device and method using the light-type conversion driving device, the light-type conversion driving device is adopted to replace an electromagnet to achieve light-type conversion, so that the adjustment allowance of the movable shading plate is made larger, and light shading near the hinge point of an original shading plate switched by the electromagnet is reduced, and thus, the light-type adjustment range is widened without increasing the outline dimension of the electromagnetic execution mechanism, and limitations of the internal space of the car lamp to the light-type conversion mechanism are reduced;
4. According to the light-type conversion driving device for the car lamp light-type conversion device, the whole light-type conversion process can be completed within 30-90 ms, and thus, the requirement for a conversion time within 200 ms is met.

### BRIEF DESCRIPTION OF THE SEVERAL VIEWS OF THE DRAWINGS

FIG. 1 is a structural view of a car lamp light-type conversion device using the light-type conversion driving device of the invention;
FIG. 2 is an external structural view of the light-type conversion driving device for the car lamp light-type conversion device of the invention;
FIG. 3 is an internal structural view of the light-type conversion driving device for the car lamp light-type conversion device of the invention;
FIG. 4 is a structural view of the light-type conversion driving device for the car lamp light-type conversion device in the state where a shading plate is driven to rotate to an operating position of the invention;
FIG. 5 is a view of the car lamp light-type conversion device in the state where the shading plate rotates to the operating position;
FIG. 6 is an exploded view of the assembly relationship of the car lamp light-type conversion device using the light-type conversion driving device of the invention;
FIG. 7 is an exploded view of parts of the light-type conversion driving device of the invention.
FIG. 8 is a perspective view of a stator core of the light-type conversion driving device of the invention;
FIG. 9 is a sectional view of the stator core of the light-type conversion driving device of the invention;
FIG. 10 is a perspective view of a rotating shaft subassembly of the invention;
FIG. 11 is a location diagram of the rotating shaft subassembly and a stator of the light-type conversion driving device before car lamp light-type conversion of the invention;
FIG. 12 is a location diagram of the rotating shaft subassembly and the stator of the light-type conversion driving device after car lamp light-type conversion of the invention;

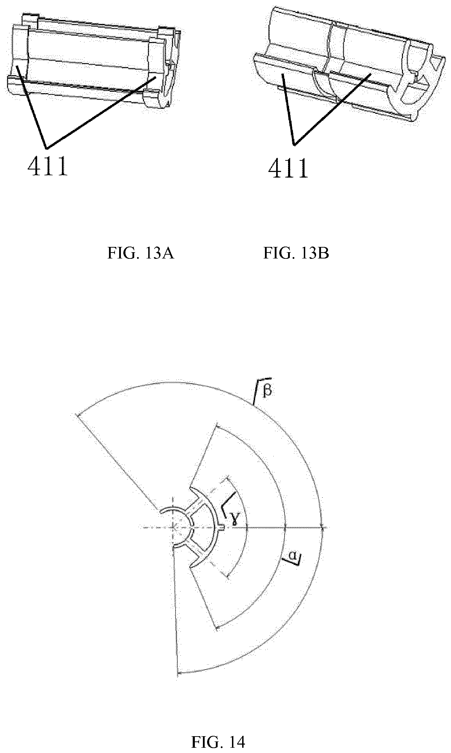

FIG. 13A and FIG. 13B are views of a silicon steel sheet protective sleeve of the stator core of the light-type conversion driving device of the invention;
FIG. 14 is a sectional view of the stator core;
FIG. 15 is a sectional view of the rotating shaft subassembly;
FIG. 16 is a state view when the rotating shaft subassembly of the light-type conversion driving device is located at a zero position of the light-type conversion driving device of the invention.

In the figures: 1-car lamp body (reflecting mirror); 2-movable shading plate; 11-elastic low-beam rotating shaft limiting gasket; 12-elastic high-beam rotating shaft limiting gasket; 3-volute spiral spring; 4-light-type conversion driving device; 5-support (used for fixing the shading plate); 6-connecting part of rotating shaft subassembly; 7-arc-shaped crown magnetic steel arranged on the arc-shaped outer circumferential surface of the connecting part; 401-shell; 402-rotating shaft subassembly; 403-stator core; 404-stator winding; 405-rotating shaft; 406-flat position; 407-side cover; 408-shaft hole; 409-inner arc-shaped sector of stator; 410-outer arc-shaped sector of stator; 411-silicon steel sheet protective sleeve; 412-bearing; α-sectorial central angle of outer arc-shaped sector of stator; β-sectorial central angle of inner arc-shaped sector of stator; γ-included angle between stator cores.

### DETAILED DESCRIPTION OF THE INVENTION

For a better understanding of the above technical scheme of the invention, the invention is further described in detail as follows in combination with the drawings and embodiments.

### Embodiments

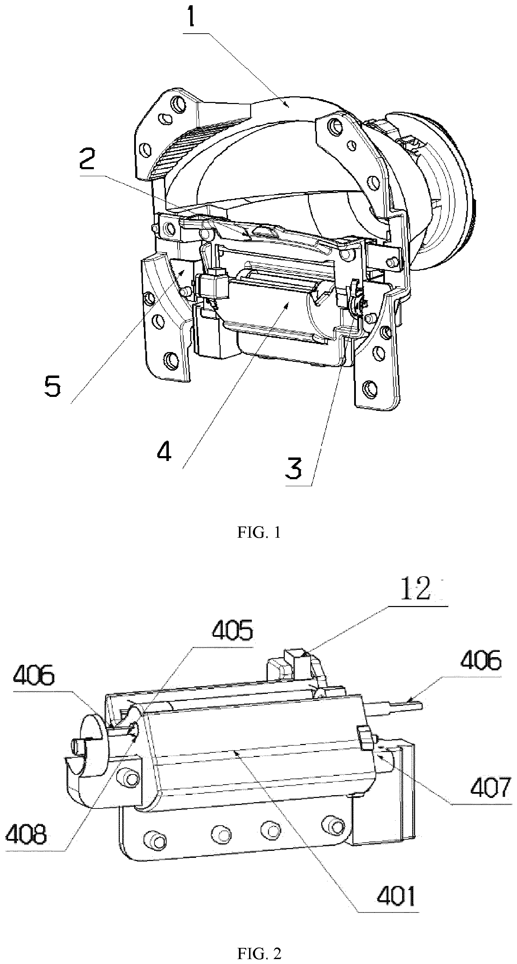

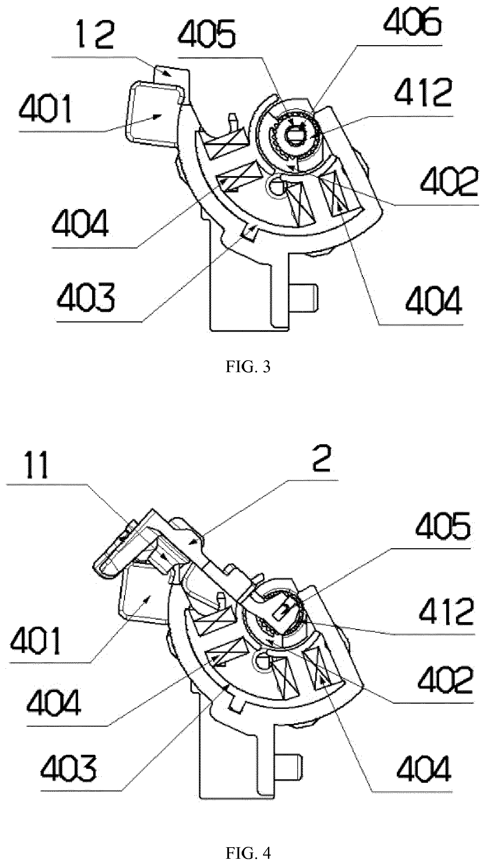

FIG. 2 and FIG. 3 show one embodiment of the light-type conversion driving device of the invention, and FIG. 4 is a structural view when the light-type conversion driving device provided with a shading plate rotates to an operating position. In this embodiment, the light-type conversion driving device comprises a shell 401, a rotating shaft subassembly 402, a stator 403, a rotating shaft 405 and end covers 407 and is used for driving a movable shading plate 2 of the car lamp light-type conversion device. To clearly show the internal structure of the light-type conversion driving device 4 of the invention, the end covers 407 are omitted in FIG. 3 and FIG. 4.

Stator windings 404 are arranged on the stator 403. The stator 403 and the stator windings 404 are fixedly arranged inside the shell 401 to constitute a pair of arc-shaped stator magnetic poles capable of being electrically excited.

The rotating shaft subassembly 402 is an arc-shaped magnetic steel part, is fixed on the rotating shaft 405 and is arranged in a magnetic field space of the arc-shaped magnetic poles of the stator 403. The rotating shaft subassembly 402 is matched with the arc-shaped stator magnetic poles to form a closed magnetic circuit with an air gap.

Two ends of the rotating shaft 405 are respectively connected with an oscillating bar which extends in the radial direction of the rotating shaft. The movable shading plate 2 of the car lamp light-type conversion device is fixedly connected to the oscillating bar on the two ends of the rotating shaft, and the oscillating angle of the movable shading plate 2 is the same as the rotation angle of the rotating shaft subassembly 402.

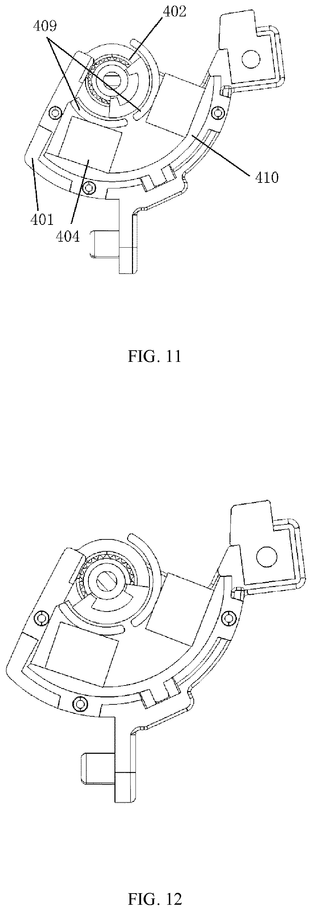

As shown in FIG. 2, FIG. 3 and FIG. 4, in this embodiment, the rotating shaft subassembly 402 of the light-type conversion driving device 4 is rotatably fixed in the magnetic field space of the arc-shaped magnetic poles of the stator 403 via shaft holes 408 formed in the end covers 407. In the power-off state, the rotating shaft subassembly stays at an initial position where magnetic steel is opposite to one magnetic pole of the stator, as shown in FIG. 3 and FIG. 11. In the power-on state, the rotating shaft subassembly rotates, under the effect of a magnetic field generated by the stator windings, to an operating position where the magnetic steel is opposite to the pair of magnetic poles of the stator, as shown in FIG. 4 and FIG. 12.

In a better embodiment of the light-type conversion driving device of the invention, the magnetic steel of the rotating shaft subassembly 402, the rotating shaft 405 and the oscillating bar are integrally formed through injection molding.

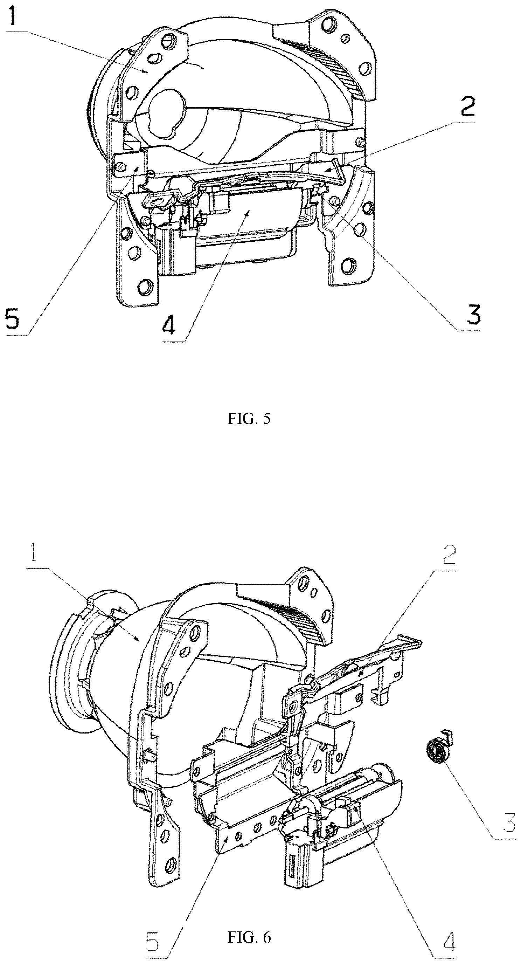

FIG. 1, FIG. 5 and FIG. 6 show one embodiment of the car lamp light-type conversion device using the light-type conversion driving device of the invention. In this embodiment, the car lamp light-type conversion device comprises a movable shading plate 2, the light-type conversion driving device 4 and a support (used for fixing the shading plate) 5 fixed on a car lamp body 1. The car lamp body 1 is generally integrated with a reflecting mirror and thus is also called a reflecting mirror. Two ends of the rotating shaft 405 of the light-type conversion driving device 4 are respectively connected with an oscillating bar which extends in the radial direction of the rotating shaft. The light-type conversion driving device 4 is fixedly connected to the support 5 through the shell 401 and is connected to the car lamp body 1 through the support 5.

The movable shading plate 2 is fixedly connected to the oscillating bar and is located on the optical axis of a car lamp. The included angle between the movable shading plate 2 and the optical axis can change along with the rotation angle of the rotating shaft subassembly 402. The contour line of the movable shading plate 2 is located on a light path of the car lamp, and a high-low illumination light type changing along with the rotation angle of the rotating shaft subassembly 402 is formed through projection.

In this embodiment of the invention, the movable shading plate 2 is integrally connected with the rotating shaft 405 and the oscillating bar through welding.

In a preferred embodiment of the invention, the light-type conversion device further comprises a volute spiral spring 3, which is fixed on the support through a spring bracket and has a free end connected to the movable shading plate 2. In the power-off state, the rotating shaft subassembly 402 returns to the initial position under the effect of the volute spiral spring and is then maintained at the initial position through the transmission of the oscillating bar and the rotating shaft 405.

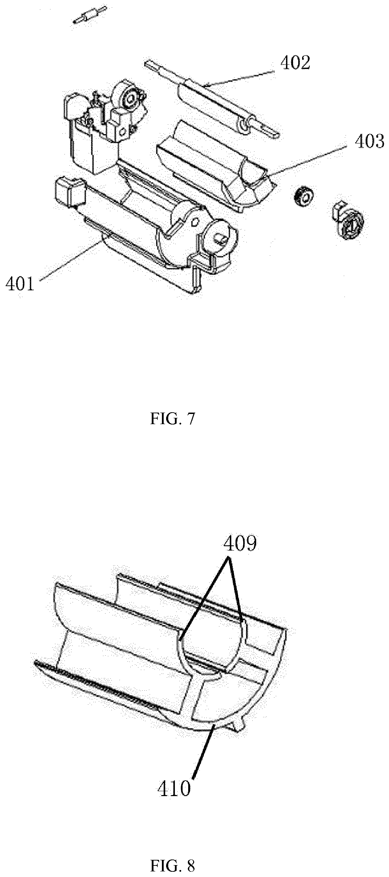

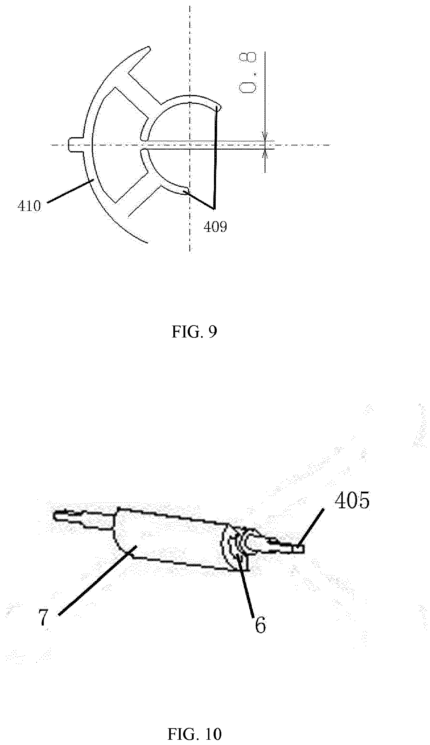

FIG. 7 and FIGs. 10-12 show the rotating shaft subassembly of the light-type conversion driving device of the invention.

As shown in FIG. 7 and FIGs. 10-12, the rotating shaft subassembly comprises arc-shaped crown magnetic steel arranged on the arc-shaped outer circumferential surface of a connecting part of the rotating shaft subassembly. The arc-shaped crown magnetic steel is fixed on the connecting part of the rotating shaft subassembly in the axial direction through axial buckle structures formed on the peripheries of two sides of the arc-shaped crown magnetic steel.

The magnetic steel is made from neodymium-iron-boron magnetic powder through die casting and has a thickness of 3-4 mm. The connecting part is made from injection-molded PBT materials. The arc-shaped crown magnetic steel of the rotating shaft subassembly has a sectorial central angle of 135°.

The stator has an arc-shaped sectorial section and is formed by stacked silicon steel sheets. Each silicon steel sheet has a thickness of 0.6 mm. The design value of the total length of the stacked silicon steel sheets is 27-30 mm.

Two stator windings are wound between an inner arc-shaped sector and an outer arc-shaped sector of the stator. The inner arc-shaped sector is composed of two inner arc-shaped sector parts spaced from each other by a gap of 1.0 mm. One stator winding is wound on each of the two inner arc-shaped sector parts. The number of turns of each stator winding is 266. Each stator winding has a wire diameter of 0.18-0.20 mm.

In addition, the outer arc-shaped sector of the stator has a sectorial central angle of 135°. The inner arc-shaped sector of the stator has a sectorial central angle of 210°.

The inner arc-shaped sector, located below the stator coil windings, of the stator is coated with environment-friendly organic paint.

In addition, the light-type conversion driving device further comprises a spring assembly composed of a volute spiral spring and a spring bracket. The spring assembly is fixed on the shell through the spring bracket and has a free end connected to the movable shading plate. In the power-off state, the rotating shaft subassembly returns to the initial position under the effect of the volute spiral spring and then is maintained at the initial position, through the transmission of the oscillating bar and the rotating shaft.

FIG. 8, FIG. 9, FIG. 11 and FIG. 12 show a stator magnetic pole of the light-type conversion driving device for the car lamp light-type conversion device of the invention, and FIG. 11 shows the (light-type conversion driving device) shell in which a stator closed magnetic circuit with an air gap is formed.

In one embodiment, the whole shell is made from white organic materials capable of reducing heat absorption.

In one embodiment, the outer circumferential surface of the shell is coated with white paint capable of reducing heat absorption.

In one embodiment, the surface of the shell of the light-type conversion driving device is plated with aluminum.

In another embodiment, a light-type conversion driving device protective cover is arranged on the periphery of the shell, is made from metal and is used for completely and tightly covering the periphery of a shell for the car lamp light-type conversion device. A bent part used for protecting the stator windings is formed on the periphery of the light-type conversion driving device protective cover, and the downward bent portion of the bent part is a straight edge.

In addition, the distance between the light-type conversion driving device protective cover and the outer circumferential surface of the shell is 0.3-1.5 mm, so that outside heat is isolated from a body of the light-type conversion driving device, and accordingly, the light-type conversion driving device is protected.

As shown in FIG. 12, a fixed shading plate 5 is connected with the movable shading plate through the rotating shaft, and the movable shading plate rotates around the rotating shaft 3.

The rotating shaft can be divided into three parts in the axial direction. The front end and the rear end of the rotating shaft are respectively connected with the fixed shading plate 5 and the movable shading plate 2 in a riveted manner. A rotating shaft limiting gasket is arranged at the end provided with the movable shading plate 2 and is located between a riveting point and the movable shading plate 2, so that free rotation of the movable shading plate 2 is ensured. Small gaps are reserved between the movable shading plate 2 and the rotating shaft limiting gasket as well as between the movable shading plate 2 and the rotating shaft 3 so that the movable shading plate can rotate more flexibly, and the conversion sensitivity is higher. The car lamp light-type conversion device can complete the whole light-type conversion process in 50 ms.

According to the light-type conversion driving device and the car lamp light-type conversion device and method using the light-type conversion driving device, a mode whereby the light-type conversion driving device is used for driving the movable shading plate is adopted to achieve light-type conversion, collision noise generated in the electromagnet attracting and releasing processes is reduced, and a more comfortable driving environment is provided for a user.

According to the light-type conversion driving device and the car lamp light-type conversion device and method using the light-type conversion driving device, the light-type conversion driving device is used for driving the movable shading plate, so that light-type vibrations caused by vibration generated in the electromagnet attracting and releasing processes and connecting looseness resulting from such vibration are reduced, and thus, the service life of the electromagnetic rotation-type car lamp light-type conversion device is prolonged, and the reliability of the electromagnetic rotation-type car lamp light-type conversion device is improved.

According to the light-type conversion driving device and the car lamp light-type conversion device and method using the light-type conversion driving device, the light-type conversion driving device is adopted to replace an electromagnet to achieve light-type conversion, so that the adjustment allowance of the movable shading plate is made larger, and light shading near the hinge point of an original shading plate switched by the electromagnet is reduced, and thus, the light-type adjustment range is widened without increasing the outline dimension of the electromagnetic execution mechanism, and limitations of the internal space of the car lamp to the light-type conversion mechanism are reduced.

## Claims

1. A light-type conversion driving device for a car lamp light-type conversion device, used for driving a shading plate of a car lamp light-type conversion device to oscillate, comprising stator cores and stator windings fixedly arranged inside a shell, and a rotating shaft subassembly arranged in a magnetic field space of stator magnetic poles, wherein:
the stator cores and the stator windings constitute a pair of arc-shaped stator magnetic poles capable of being electrically excited;
the rotating shaft subassembly has a sectorial section, is arranged in the magnetic field space of the arc-shaped stator magnetic poles, and is matched with the arc-shaped stator magnetic poles to form a closed magnetic circuit with an air gap;
the rotating shaft subassembly comprises:
a rotating shaft;
arc-shaped crown magnetic steel arranged on an outer circumferential surface of a top of the sectorial rotating shaft subassembly; and
a connecting part fixedly connected with the rotating shaft and the arc-shaped crown magnetic steel;
the arc-shaped crown magnetic steel of the rotating shaft subassembly has a sectorial central angle of 80-200° and a sectorial diameter of Φ5 ∼ 12mm; and
the rotating shaft subassembly oscillates around the rotating shaft with a center of the rotating shaft as an original point, has two ends respectively connected with an oscillating bar extending in a radial direction of the rotating shaft, and is used for driving the shading plate of the car lamp light-type conversion device to oscillate, and an oscillating angle of the shading plate is the same as a rotation angle of the rotating shaft subassembly.

2. The light-type conversion driving device for the car lamp light-type conversion device according to Claim 1, wherein:
the arc-shaped crown magnetic steel arranged on an arc-shaped outer circumferential surface of the connecting part is made from neodymium-iron-boron magnetic powder through die casting, has a surface provided with a countersunk head structure for improving product strength, and has a thickness of 2-5 mm.

3. The light-type conversion driving device for the car lamp light-type conversion device according to Claim 1, wherein:
each said stator core has an arc-shaped sectorial section, the two stator windings are wound between an inner arc-shaped sector and an outer arc-shaped sector of the stator, the inner arc-shaped sector is composed of two arc-shaped sector parts made by silicon steel sheets with a reversing micro-groove, having an interval of 0.5-2 mm and preferably of 0.8-1.2 mm, formed therebetween, and each said stator winding is wound between the corresponding one of the two inner arc-shaped sector parts and the outer arc-shaped sector.

4. The light-type conversion driving device for the car lamp light-type conversion device according to Claim 1, wherein:
an outer arc-shaped sector of the stator has a sectorial central angle of 100-160°, and an inner arc-shaped sector of the stator has a sectorial central angle of 170-230°.

5. The light-type conversion driving device for the car lamp light-type conversion device according to Claim 1, wherein:
each said stator core is formed by stacked silicon steel sheets through punching, each said silicon steel sheet has a thickness of 0.3-2 mm and preferably has a thickness of 0.5-0.8 mm, and the stacked silicon steel sheets of each said stator core have a total length of 20-40 mm and preferably has a total length of 25-30 mm.

6. The light-type conversion driving device for the car lamp light-type conversion device according to Claim 1, wherein:
the number of turns of each said stator winding is 200-350 and preferably is 248-288, and each said stator winding has a wire diameter of 0.14-0.28 mm and preferably has a wire diameter of 0.18-0.20 mm.

7. The light-type conversion driving device for the car lamp light-type conversion device according to Claim 1, wherein:
the arc-shaped crown magnetic steel of the rotating shaft subassembly has a sectorial central angle of 100-140°, the arc-shaped crown magnetic steel and limiting parts on two ends of an injection-molded plastic have a sectorial central angle of 60-120°, and preferably, a design value of the sectorial central angle of the limiting parts on the two ends of the injection-molded plastic is 90-100°.

8. A conversion method using the light-type conversion driving device for the car lamp light-type conversion device according to any one of Claims 1-7, used for driving the movable shading plate of the car lamp light-type conversion device to oscillate, wherein:
the rotating shaft subassembly is rotatably fixed in the magnetic field space of the arc-shaped magnetic poles of the stator via shaft holes formed in end covers at two ends of the rotating shaft subassembly;
in a power-off state, the rotating shaft subassembly stays at an initial position where the magnetic steel is opposite to one said magnetic pole of the stator;
in a power-on state, the rotating shaft subassembly rotates, under the effect of a magnetic field generated by the stator windings, to an operating position where the magnetic steel of the rotating shaft subassembly is opposite to the pair of magnetic poles of the stator;
two ends of the rotating shaft subassembly are respectively connected with an oscillating bar which extends in the radial direction of the rotating shaft;
the movable shading plate is fixedly connected to the oscillating bar and is located on an optical axis of a car lamp, and an included angle between the movable shading plate and the optical axis changes along with the rotation angle of the rotating shaft subassembly; a contour line of the movable shading plate is located on a light path of the car lamp, and a high-low illumination light type changing along with the rotation angle of the rotating shaft subassembly is formed through projection; and the oscillating angle of the movable shading plate is the same as the rotation angle of the rotating shaft subassembly.

9. The conversion method using the light-type conversion driving device for the car lamp light-type conversion device according to Claim 8, wherein:
a magnetic pole of the rotating shaft subassembly is an N pole;
after coils of the stator windings are powered on, a magnetic field is generated in the light-type conversion driving device, the windings on an upper side generate an N pole repelling a rotor, and the windings on a lower side generate an S pole attracting the rotor;
the rotating shaft subassembly rotates downwards under the dual effect of a repulsive force generated by the windings on the upper side and an attractive force generated by the windings on the lower side; and
the movable shading plate of the car lamp light-type conversion device is driven to oscillate to complete light-type conversion.

10. The conversion method using the light-type conversion driving device for the car lamp light-type conversion device according to Claim 8, wherein:
the method comprises a light-type conversion limiting mechanism, connected with the light-type conversion driving device shell arranged on the car lamp light-type conversion device, of the light-type conversion driving device;
the light-type conversion limiting mechanism of the light-type conversion driving device comprises an elastic low-beam rotating shaft limiting gasket and an elastic high-beam rotating shaft limiting gasket;
the elastic low-beam rotating shaft limiting gasket is arranged on an upper portion of the movable shading plate and are used for preventing the movable shading plate from colliding with a fixed shading plate behind when the movable shading plate rotates to a low-beam position; and
the elastic high-beam rotating shaft limiting gasket is arranged on a side cover subassembly on one end of a front portion of the light-type conversion driving device shell and is used for preventing the movable shading plate from colliding with the light-type conversion driving device shell in front when the movable shading plate rotates to a high-beam position.
